(19) Europäisches Patentamt
European Patent Office
Office européen des brevets

(11) **EP 0 614 733 B1**

(12) **EUROPEAN PATENT SPECIFICATION**

(45) Date of publication and mention
of the grant of the patent:
**23.04.1997 Bulletin 1997/17**

(51) Int. Cl.$^6$: **B26D 1/60**

(21) Application number: **94103028.0**

(22) Date of filing: **01.03.1994**

(54) **A synchronizing device, particularly for systems for the manufacture and packaging of food products**

Synchronisationsvorrichtung, insbesondere für Systeme zur Herstellung und Verpackung von Lebensmitteln

Dispositif de synchronisation, notamment pour systèmes de production et emballage de produits alimentaires

(84) Designated Contracting States:
**AT BE CH DE DK ES FR GB GR IE IT LI LU MC NL PT SE**
Designated Extension States:
**SI**

(30) Priority: **12.03.1993 CH 751/93**

(43) Date of publication of application:
**14.09.1994 Bulletin 1994/37**

(73) Proprietors:
• **SOREMARTEC S.A.**
  **6700 Arlon-Schoppach (BE)**
  Designated Contracting States:
  **BE CH DK ES FR GB GR IE LI LU MC NL PT SE AT**

• **Ferrero S.p.A.**
  **I-12051 Alba (Cuneo) (IT)**
  Designated Contracting States:
  **IT**
• **FERRERO OFFENE HANDELSGESELLSCHAFT m.b.H.**
  **D-60599 Frankfurt (DE)**
  Designated Contracting States:
  **DE**

(72) Inventor: **Giamello, Bruno**
**I-12051 Alba (Cuneo) (IT)**

(74) Representative: **Bosotti, Luciano et al**
**c/o JACOBACCI & PERANI S.p.A.**
**Corso Regio Parco, 27**
**10152 Torino (IT)**

(56) References cited:
**EP-A- 0 071 653**     **US-A- 4 359 918**
**US-A- 4 695 346**

**Description**

The present invention relates to a movement-synchronizing device according to the preamble to Claim 1, which is known, e.g. from US-A- 4 359 918.

The invention has been developed with particular attention to its possible use in systems for the manufacture and packaging of food products such as, for example, confectionery products.

In this field of application, a need often arises to perform various operations (for example, the withdrawal of products, the loading of products, decoration, packaging, etc.) on products which are moving along a conveyor line, without stopping, or at least without substantially stopping, the advance of the products.

In this situation of use, it is known to dispose the members for operating on the products on devices (slides). For instance EP-A-0 071 653 discloses an arrangement where a horizontally reciprocating table supports a number of operating stations (i.e. without movement proper with respect to a conveyor line). The reciprocating table has associated therewith operating means enabling the two strokes of the back-and-forth movement to be performed at different speeds. Arrangements are also generally known in the art which employ slides which are movable back and forth along a conveyor line. This enables the members which operate on the products to follow the products along the line, so to speak, during their operating phase. During their following travel, the members thus remain substantially stationary relative to the products on which they are operating even though the products continue to move along the conveyor line.

In particular, it is known to cause the slide on which the members operating on the products are mounted to move back and forth by means of a follower device which has a cam and is subservient to the drive system of the line on which the products are advancing. This takes place with the use of a wholly mechanical control solution.

Other solutions are also known, however, in which the slide is moved back and forth by an electric motor (for example, by means of a screw which engages a female thread mounted on the slide). In this case, the electric motor which drives the slide is made electronically subservient to the drive system which advances the product along the line.

Although the solutions described above are wholly satisfactory conceptually, various problems are encountered in implementing them, particularly in connection with the inertia of the parts concerned. This occurs not only with purely mechanical solutions but also with solutions in which the slide is moved by a motor which is electronically subservient to the production line. These problems become more and more problematical and difficult to solve as the operating speed of the line increases, until the actual physical limits of the intrinsic inertia of the motor driving the slide are reached, both as regards the absolute speed of movement of the slide and - particularly - as regards the reciprocating nature of the movement of the slide. In fact, it should be noted that the frequency of the reciprocating movement increases as the number of products to be followed on the line increases and hence - in practice - with increases in the rate of operation of the line. The most critical aspect of the problem is thus the actual reciprocating character of the movement of the slide, particularly with regard to the changing of its direction of movement at the two ends of its line-following stroke.

There is therefore a need to provide a following device which, whilst retaining all the advantages of the previously-known solutions, particularly as regards the accuracy with which it follows the conveyor line, overcomes the problem connected with the reciprocating character of the movement of the slide in a radical manner.

The object of the present invention is to provide a solution to this problem.

According to the present invention, this object is achieved by virtue of a device having the specific characteristics recited in Claim 1.

The invention will now be described, purely by way of non-limiting example, with reference to the appended drawings, in which:

Figure 1 shows the structure of a device according to the invention, associated with a production line,

Figure 2 is a graph comprising two superposed curves indicated a and b, respectively, which represent two time graphs indicative of the behaviour of some kinematic quantities characteristic of a device according to the invention, and

Figure 3 shows an advantageous development of the solution according to the invention.

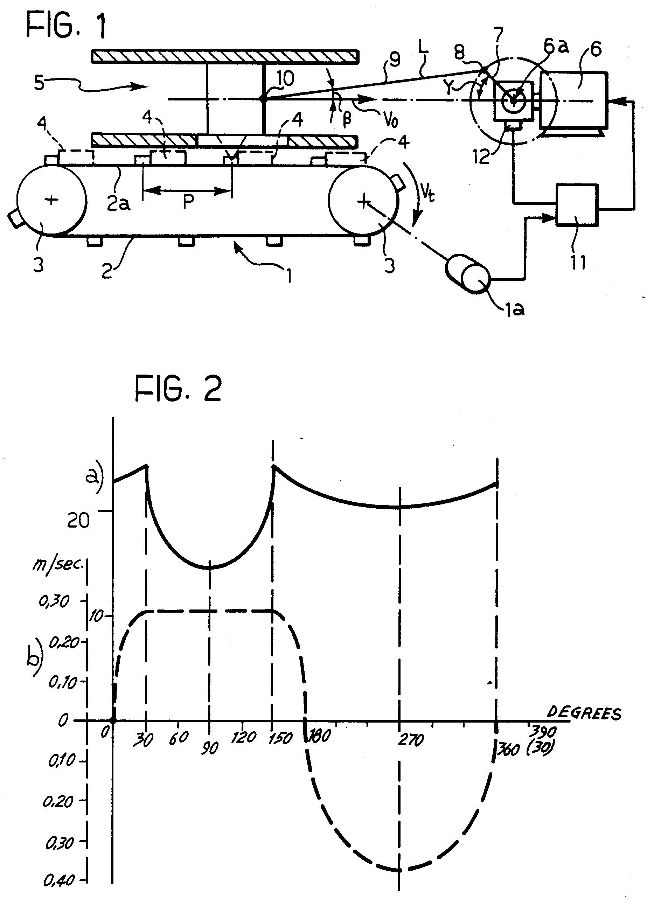

As a premise, it is pointed out that Figures 1 to 3 show the device according to the invention in a generally schematic form with the main intention of showing as clearly as possible the kinematic characteristics which regulate its operation.

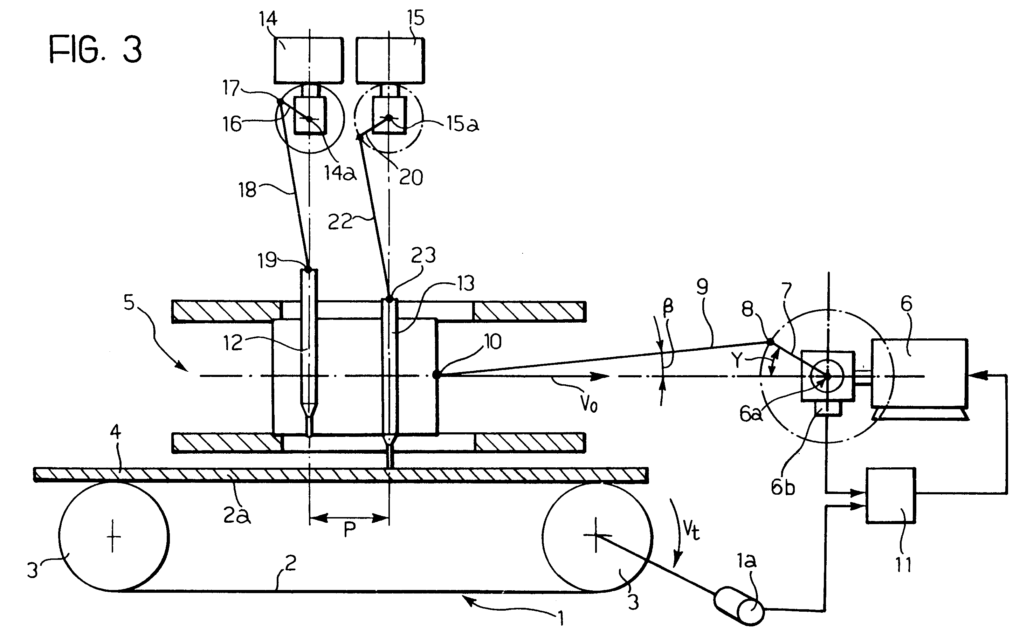

In particular, it should be noted that, although Figure 3 relates specifically to a following device for association with a cutting/welding unit (for example, a unit with ultrasound cutters), the field of application of the solution according to the invention is in fact general.

In summary, the invention relates essentially to a following device for association with a conveyor line 1, shown schematically herein in the form of a motor-driven belt conveyor.

In particular, the conveyor in question is constituted by an endless belt 2 extending around two end rollers 3 which have horizontal axes and at least one of which is assumed to be driven so that it can entrain the belt 2 in the sense of movement which causes the upper pass of the belt, indicated 2a, to move horizontally (from left to right with reference to Figures 1 to 3) at a constant speed Vt so as to convey thereon products 4 separated by uniform spaces P.

This result can be achieved, for example, by providing the belt 2 with entrainment elements such as dogs or plates disposed at uniform spacings equal to P. This is in accordance with widely known criteria which do not need to be described herein and, moreover, are not relevant for the purposes of the invention.

In particular, the nature of the products 4 is wholly unimportant for the purposes of implementing the invention. By way of example, the products 4 might be constituted by food products, such as confectionery products, advancing within an automatic production and/or packaging system of which the line 1 constitutes a branch.

A slide, generally indicated 5, is slidable on horizontal guides disposed above the upper, active pass 2a of the belt 2. The slide 5 can thus perform a horizontal movement back and forth parallel to the advance of the products 4 on the line 1.

In particular, the slide 5 is intended to carry some members (such as the cutters 12 and 13 which will be mentioned further below) for carrying out a certain handling or processing operation on the products 4.

The possibilities as regards the selection of the members (not shown explicitly in Figure 1) are also very diverse; for example, they may be members for carrying out decoration, coating, orientation, printing, withdrawal, admission of products to the flow, boxing, wrapping, cutting etc.

In any case, a reciprocating motion is to be imparted to the slide 5 in a manner such that during at least part of its travel in the same direction as the line 1, the slide 5 follows the upper pass 2a of the line 1 at a constant speed equal to the speed Vt of advance of the belt and hence of the products 4. In these conditions, that is, whilst the slide 5 is following the upper pass of the belt 2a at the speed Vt, the members which are on the slide act on underlying products 4 which, throughout the following stroke, appear to the devices to be "stationary", that is, the component of relative movement in the general direction of advance of the products 4 along the line 1 is zero.

In the solution according to the invention, the slide 5 is moved back and forth by a rotary motor 6 (such as a brushless electric motor), which rotates (for example, by means of a gear) a shaft 6a to which a crank 7 of length R is keyed. A first end of a connecting rod 9 is articulated to the pin 8 of the crank 7 and its opposite end is articulated to the slide 5 at a point 10 which, for simplicity of illustration, is assumed to be situated at the same height as the shaft 6a of the motor 6.

By rotating the motor 6 (clockwise with reference to the situation shown in Figures 1 to 2) it is possible to impart to the slide 5 a back-and-forth movement comprising an active stroke, that is, a stroke for following the line 1 (from left to right with reference to the drawings in question) and a return stroke (from right to left). This takes place without the need to reverse the sense of rotation of the motor 6 at any time.

As a result of this arrangement, the motor 6 is freed of the inertia problems which arise in solutions of the prior art when it is necessary to stop the motor which drives the slide and immediately reverse the sense of movement.

Although the following portion of the present description will refer to the use of a structure in which the crank 7 has a fixed length R (meaning the distance between the axis of the shaft 6a and the crank pin 8), the solution according to the invention may also advantageously be applied to structurally similar eccentric devices, for example, crank-and-slotted-link mechanisms.

The reference made in the following claims to a connecting-rod-and-crank mechanism should therefore be understood as also including structurally equivalent mechanisms such as, for example, crank-and-slotted-link mechanisms, and hence, in general, all mechanisms in which a rotary motion in a single sense is transformed into a back-and-forth translatory motion.

The speed at which the slide follows the line 1 and the products 4 during its active stroke (from left to right in Figures 1 to 3) as it performs its translatory movement along the horizontal guides above the line 1 may be expressed by an equation of the type:

$$Vo = 2\pi Rn \cdot \sin(\gamma + \beta) \cos\beta$$

where $V = 2\pi Rn$ indicates the tangential velocity of the crank pin 8, $\gamma$ indicates the angle at which the crank 7 is inclined to the horizontal, that is, to the line of movement of the slide 5, (as stated, it is assumed that, in practice, the shaft 6a is disposed at the same height as the point 10 at which the connecting rod 9 is articulated to the slide 5), and $\beta$ indicates the angle of inclination of the connecting rod 9, which is assumed to be of length L, again relative to the line of movement of the slide 5, which is horizontal.

For precision, the angles $\gamma$ and $\beta$ are those at the base of the triangle having, as its lower vertices, the point on the shaft 6a at which the crank 7 is articulated and the point 10 at which the connecting rod 9 is articulated to the slide 5 and, as its upper vertex, the crank pin 8. Naturally $2\pi n = \omega$ represents the angular velocity in rad/sec of the shaft 6a (n = revs./second).

An examination of equation (I) given above indicates that, if the speed of rotation (n) of the motor 6 is kept constant, the speed of movement of the slide 5 is not in fact constant and does not thus achieve - except very approximately - the desired effect of following the line 1 without relative longitudinal movement between the slide 5 and the line 1.

In order to achieve this result, it is necessary to control the motor 6 in a manner such that its speed is varied continuously, at least for the length of the useful stroke of the slide 5, so as to keep the speed of movement Vo of the slide constant, that is, so that $Vo = Vt$.

This result is achieved, in the solution according to the invention, by associating with the motor an electronic control device 11 (of known type) which senses, by means of an angular detector such as, for example, an encoder 6b associated with the motor 6, the instantaneous angular position (the angle $\gamma$) of the shaft 6a, and hence of the crank 7.

Preferably, a speed and position sensor 1a (for example, constituted by a so-called encoder) is associated with the line 1 and - in known manner - enables the electronic control 11 to adapt and synchronise (even in phase) the movement of the slide 5 to the movement of the line 1.

In practice, the sensor 6b may be regulated so as to output a signal corresponding to the value of the angle $\gamma$. The device 11 can calculate the value of the angle $\beta$ (naturally, since R and L are known) by means of a simple processing operation (in practice, by means of a control program stored once and for all).

It is thus possible to act on the speed of rotation of the motor 6 in a manner such that Vo (the speed of movement of the slide 5 in the direction in which it follows the line 1) is kept constant. This result can be achieved by controlling the angular velocity $2\pi n$ of the motor in a manner such that $2\pi n = Vt/(R \sin (\gamma + \beta) \cos\beta)$ where Vt (the speed of the line 1) is constant.

Theoretically, this equation can be imposed throughout the active movement of the slide 5 in the same direction as the line 1 ($0° < \gamma < 180°$).

However, tests carried out by the Applicant show that, in general, it is more advantageous if the speed of the slide 5 during the initial and final portions of its stroke following the line 1 increases gradually from 0 to the desired value $Vo = Vt$ and then decreases again, also gradually, from Vo to a value of 0 at the end of its useful stroke.

The Applicant has noted that for most applications, it is generally advantageous for the initial acceleration stage to extend over the portion of the following stroke which corresponds to values of the angle $\gamma$ (see Figure 1 again) of between 0° and 30°, and the decelerating travel for a symmetrical range of values, that is, when $\gamma$ is between 150° and 180°.

This solution is illustrated in greater detail in the graph of Figure 2 the lower portion, indicated b, of which shows the instantaneous speed of movement of the slide 5 as a function of the angle $\gamma$ (measured in degrees).

As can be seen, the speed Vo of the slide 5 increases gradually from 0 to the desired value (typically between 0.20 and 0.30 metres per second) with a gradual curve according to a law of the type

$$Vo = 2\pi Rn . \sin (\gamma + \beta). \cos\beta \text{ where n is constant (II).}$$

Within the useful stroke ($\gamma$ between 30° and 150°) the speed of movement of the slide is subsequently kept constant as described above.

In the final portion of the following stroke ($\gamma$ between 150° and 180°) the law for the movement of the slide can again be expressed by equation (II), and hence by a decelerating curve.

During the return stroke ($\gamma$ between 180° and 360°) the movement of the slide can either take place with an acceleration-deceleration law corresponding to a constant speed of rotation of the shaft 6a, or may adopt different behaviour, for example, if a particularly rapid return of the slide 5 to the starting position of the following stroke is to be achieved.

The top part of the graph of Figure 2 (graph 2a) shows the corresponding curve of the control of the speed of rotation n (revolutions/minute) of the motor 6 achieved by the device 11.

A control function of this type can easily be achieved with a brushless motor, particularly when a step-counting control strategy is adopted.

By way of indication, if it is assumed that a useful stroke ($\gamma$ between 30° and 150°) of the order of 0.33 m is to be imparted to the slide 5, the use of a crank having a length R of 190 mm and a connecting rod with a length $L = 6R$, that is 1143 mm may be considered. This is all upon the assumption that the spacing P of the products on the line concerned is 0.825 R and the speed of movement is of the order of 0.275 metres per second.

The arrangement described above enables the useful stroke Cu to be travelled in a period of 1.2 seconds with a time of 3 seconds for the whole cycle of the connecting-rod-and crank mechanism.

In particular, the tests carried out by the Applicant show that it is possible to achieve a movement of this type with the use of a speed of rotation of the motor of the order of 24.33 revolutions/minute ($\gamma$ between 150° and 30°). During the actual following stage, the speeds of rotation of the motor vary according to the law shown in the graph 2a.

In particular, with reference to the speed value n indicated above, the speed of rotation will fall to 17.73 revolutions/second when $\gamma$ reaches the value of 45°, falling further to 15.03 revolutions/minute and then to 14.18 revolutions/minute when $\gamma$ reaches the values of 60° and 75°, respectively.

The speed of the motor reaches its minimum value of 14.07 revolutions/minute when $\gamma = 90°$.

Figure 3 relates to an embodiment of the invention in which the members mounted on the slide 5 are constituted by two cutters (for example, ultrasound cutters) for acting on the products 4 which are on the line 1. In the specific case, the products 4 are constituted by a food product which, initially, is in the form of a continuous strip and is divided into successive pieces (products 4) as a result of the action of the cutters 12, 13.

The cutters 12, 13 (the operating characteristics of which may be considered widely known and hence do not require a detailed description herein) are driven, as regards their reciprocating movement upwards and downwards towards the active cutting position, by respective motors 14, 15 (for example, such as rotary electric motors) which operate the cutters 12 and 13 by means of respective connecting-rod-and-crank kinematic operating mechanisms wholly identical to the connecting-rod-and-crank kinematic mechanism which brings about the horizontal back-and-forth movement of the slide 5.

In particular, the motor 14 drives a respective shaft, to which a crank 16, with a pin 17, is keyed. The upper end of a connecting rod 18 is articulated on the pin 17 and its lower end is articulated to the cutter 12 at 19.

In exactly the same way, the motor 15, the output shaft of which is indicated 15b, drives a crank 20 articulated by means of a pin 21 to a connecting rod 22 which in turn is articulated to the cutter 13 at 23.

The back-and-forth movement (or, more correctly, the raising and lowering) of an element moving with reciprocating motion (like the cutters 12 and 13) can thus also be brought about as a result of a rotation in a single sense (without changes of direction).

The solution described with reference to Figure 3 can naturally also be used with reference to a single cutter.

In this case, in order to achieve precise cutting of the product 4, it suffices to ensure that the cutter 12 travels the lower portion of its path involving i) movement towards the product 4, ii) acting on the product 4, and iii) moving away upwards, whilst the slide 5 is travelling along the path in which it follows the line 1 at the speed Vt, which is kept constant.

The solution shown in Figure 3, which provides for two cutters to be mounted on the slide 5, offers the advantage that the frequency of operation of each cutter on the product 4 can be reduced (halved).

In fact, when a single cutter is used, each operation of the cutter on the product forms a cutting line corresponding to the rear edge (in the direction of advance on the line 1) of a product and the front edge (again in the direction of advance) of the next product.

It is thus necessary to provide for a complete lowering and raising cycle of the cutter for each product produced by the cutting of the product 4.

With the use of two cutters 12 and 13, according to the solution shown in Figure 3, however, the speed of movement of each cutter can be reduced by half.

Each product produced by the subdivision of the continuous product 4 will in fact have its front edge defined by one of the cutters and its rear edge defined by the other cutter.

Moreover, the solution described above can thus be extrapolated to an even larger number of movable members, consequently reducing their speed of movement. In practice, instead of having to perform a complete cycle (lowering and raising in the case of a cutter) for each product 4 processed, if n members (for example, n cutters) are available, it suffices to perform one cycle for every n products processed. Clearly, in the embodiment illustrated, n = 2.

Naturally, whereas the speed of rotation of the motor 6 is controlled, in the terms described above, so that, during its stroke following the line 1, the slide 5 moves at the same speed as the line ( Vo = Vt ), the motors 14 and 15 are usually rotated at constant speeds. The lowering and raising of the cutters 12 and 13 does not therefore take place at a constant speed but, on the contrary, with minimum values (zero at the point at which the direction of movement is changed) at the tip positions (the top and bottom dead points) and maximum values in the middle position of the lowering and raising movement (when the crank pins 17 and 21 are aligned horizontally with the shafts 14a and 15b of the two motors).

The rotary movements of the motors 6, 14 and 15 can be synchronized (by the adjustment of their relative phases) so as to achieve an optimal cutting operation (or the operation carried out by the operating members mounted on the slide 5, in general).

In particular, the slide 5 and the cutters 12 and 13 may be moved cyclically starting from the initial position shown in Figure 3.

In these conditions, the motor 6 is in the rotary position corresponding to the start of the stage in which the slide 5 follows the line 1 at a constant speed (angle $\gamma$ = 30 ° - see also the graph of Figure 2).

At this moment, the motor 15 is regulated so as to bring the cutter 13 which is in the downstream position (with respect to the direction of advance of the line 1 ) to the start of the cutting stage (contact with the product to be cut) whilst the upstream cutter 12 is in a more raised position, in practice, with the phase of the motor 14 (or, more correctly, of the crank mechanism driven thereby) delayed by 60° relative to the phase of the motor 15 and of the crank mechanism driven thereby.

The cutting stage is completed when the cranks 16 and 20 have travelled through 180° and the crank 7 is in the angular position corresponding to the value $\gamma$ = 150° (the end of the constant-speed following stroke).

In these conditions, the downstream cutter 13, which has completed the cutting operation, is raised from the product 4 again by a distance corresponding to the distance separating the cutter 12 from the product 4 in Figure 3. At the same time, the cutter 12 which has just completed the cutting operation has just left the product 4 and, in practice, is at a height corresponding to the height at which the cutter 13 is disposed in Figure 3.

From this position, the three crank mechanisms which operate the slide 5 and the cutters 12 and 13, respectively, complete their rotary movements to return to the starting position of the cycle shown in Figure 3.

For this purpose, the cranks 16 and 20 perform the remaining 180 ° of their rotary stroke whilst the crank 7 which drives the slide 5 returns to the value of $\gamma = 30$ °.

As stated, the motors 14 and 15 rotate at constant speeds which can be increased or decreased upon command so that the cutting pitch P can be varied. The motor 6, on the other hand, has to adapt its speed to that of the line 1 for each cycle (to achieve $Vo = Vt$, as shown above) and to remain synchronized with the motors 14 and 15 to restart the cutting cycle with the cranks in the positions shown in Figure 3.

If the speed of the conveyor 1 is increased, the motors 6, 14 and 15 must adapt to the new situation without affecting the pitch P: this operation can easily be carried out by means of the control circuits of the motors.

Naturally, the principle remaining the same, the details of construction and forms of embodiment may be varied widely with respect to those described and illustrated, without thereby departing from the scope of the present invention as defined by the claims.

**Claims**

1. A movement-synchronizing device for acting, in use, between a conveyor line (1), on which a flow of products (4) is advancing, and a movable device (5) which can move back and forth along the general line of advance of the products on the conveyor line (1) so as to perform a stroke following the movement of the products on the conveyor line (1) the device including a connecting-rod-and-crank mechanism comprising a crank (7) driven in a rotary fashion by the drive means (6) and a connecting rod acting between the pin (8) of the crank (7) and the movable device (5) so that the movement of the drive means (6) in a single sense brings about reciprocating movement of the movable device (5), characterized in that it comprises:

   - drive means (6) with associated control means (11) for selectively regulating the speed ($2\pi$n) of the drive means (6), and
   - sensor means (1a) which detect one of the position and the speed of movement of the conveyor line (1), and generate a respective signal, the control means (11) being sensitive to the respective signal so as to synchronize the movement of the movable device (5) with the movement of the conveyor line (1) as well as to the position ($\gamma$, $\beta$) of at least one of the crank (7) and the movable device (5) in order selectively to regulate the speed ($2\pi$n) of the drive means (6) during at least a portion of the said following stroke of the movable device (5) so as to keep the speed of movement (Vo) of the movable device (5) constant and corresponding to the speed (Vt) of the products (4) on the conveyor line (1).

2. A device according to Claim 1, characterized in that the control means (11) regulate the speed ($2\pi$n) of the drive means (6) according to an equation of the type

$$2\pi n = Vt/(R \sin ( \gamma + \beta) \cos\beta)$$

   where

   $2\pi$n identifies the speed of the drive means,
   $\gamma$ is an angle identifying the angular position of the crank (7) relative to the line of movement of the movable device (5),
   $\beta$ is a further angle indicative of the inclination of the connecting rod (9) to the line of movement of the movable device (5), and
   Vt identifies the speed of the products (4) on the conveyor line (1), and
   R is a proportionality constant (the crank radius).

3. A device according to Claim 1 or Claim 2, characterized in that the control means (11) act on the drive means (6) so as to keep the speed of movement of the movable device (5) constant only for a portion of the stroke in which the movable device (5) follows the conveyor line (1) so that, in at least one of the initial portion and the final portion of the following stroke, the movable device (5) moves at a non-uniform speed.

4. A device according to Claim 3, characterized in that the drive means (6) are operated at a constant speed during the initial and final portions of the following stroke.

5. A device according to any one of the preceding claims, characterized in that the drive means comprise a rotary motor (6).

6. A device according to Claim 1 or Claim 5, characterized in that the drive means (6) are operated electrically.

7. A device according to Claim 6, characterized in that the drive means comprise a brushless electric motor (6).

8. A device according to any one of the preceding claims, characterized in that the movable device (5) carries at least one movable member (12, 13) which can act on the products (4) during the following stroke.

9. A device according to Claim 8, characterized in that the at least one movable member (12, 13) is a cutter.

10. A device according to Claim 9, characterized in that the cutter is an ultrasound cutter (12, 13).

11. A device according to any one of Claims 8 to 10, characterized in that the at least one movable member (12, 13) moves with a reciprocating motion relative to the conveyor line (1).

12. A device according to Claim 11, characterized in that the at least one movable member (12, 13) is driven by means of a respective connecting-rod-and-crank mechanism (16, 18; 20, 22) by respective drive means (14, 15) which move in a single sense.

13. A device according to Claim 12, characterized in that the respective drive means (14, 15) are synchronized with the drive means (6) so that the reciprocating motion of the at least one movable member (12, 13) is brought about in synchronism with the movement of the movable device (5) for following the conveyor line (1).

14. A device according to Claim 13, characterized in that a movable element is associated with the movable device (5) and can perform a respective cycle of movement for each product (4) processed.

15. A device according to Claim 13, characterized in that a plurality (n) of movable members (12, 13) is associated with the movable device (5) and each can perform a respective cycle of back-and-forth movements for each corresponding plurality (n) of products processed (4).

16. A device according to Claim 15, characterized in that two movable members (12, 13) are associated with the movable device (5) and each performs a respective cycle of back-and-forth movements for each two products processed (4), and for each back-and-forth movement of the movable device (5).

17. A device according to Claim 15 or Claim 16, characterized in that the back-and-forth movements of the movable members (12, 13) are synchronized with each other, the angle of the phase difference between the movements determining the distance (P) separating successive positions at which the movable members (12, 13) operate on the products (4) advancing on the conveyor line (1).

**Patentansprüche**

1. Bewegungs-Synchronisationsvorrichtung zum Einwirken bei der Anwendung zwischen einem Fließband (1), auf der sich ein Strom an Produkten (4) vorwärts bewegt, und einer bewegbaren Vorrichtung (5), die sich entlang der allgemeinen Vorwärtsbewegung der Produkte auf dem Fließband (1) hin- und herbewegen kann, um so einen der Bewegung der Produkte auf dem Fließband (1) folgenden Hub auszuführen, wobei die Vorrichtung einen Kurbelstangentrieb beinhaltet, der eine Kurbel (7) umfaßt, die durch ein Antriebsmittel (6) drehartig angetrieben wird, sowie eine Pleuelstange, die zwischen dem Bolzen (8) der Kurbel (7) und der bewegbaren Vorrichtung (5) wirkt, so daß die Bewegung des Antriebsmittels (6) in einem Drehsinn eine Hin- und Herbewegung der bewegbaren Vorrichtung (5) bewirkt,

**dadurch gekennzeichnet, daß** sie umfaßt:

- Antriebsmittel (6) mit zugehörigen Steuerungsmitteln (11) zum Regulieren der Geschwindigkeit ($2\pi n$) des Antriebsmittels (6), und
- Sensormittel (1a), die die Position oder die Bewegungsgeschwindigkeit des Fließbands (1) detektieren und ein entsprechendes Signal erzeugen, wobei die Steuerungsmittel (11) auf das entsprechende Signal sensitiv sind, um so während zumindest eines Teilbereichs des Folgehubs der bewegbaren Vorrichtung (5) die Bewegung der bewegbaren Vorrichtung (5) mit der Bewegung des Fließbands (1) zu synchronisieren wie auch zu der Position ($\gamma$, $\beta$) von zumindest der Kurbel (7) oder der bewegbaren Vorrichtung (5), um die Geschwindigkeit ($2\pi n$) des Antriebsmittels (6) selektiv zu regulieren, um so die Bewegungsgeschwindigkeit (Vo) der bewegbaren Vorrichtung (5) konstant zu halten und entsprechend der Geschwindigkeit (Vt) der Produkte (4) auf dem Fließband (1).

2. Vorrichtung nach Anspruch 1, **dadurch gekennzeichnet, daß** die Steuerungsmittel (11) die Geschwindigkeit (2πn) des Antriebsmittels (6) regeln gemäß der Gleichung

$$2\pi n = Vt/ (R \sin (\gamma + \beta) \cos \beta),$$

wobei

$2\pi n$ die Geschwindigkeit des Antriebsmittels darstellt,
$\gamma$ ein Winkel ist, der die Winkelstellung der Kurbel (7) relativ zur Bewegungsrichtung der bewegbaren Vorrichtung (5) darstellt,
$\beta$ ein Weiterer Winkel ist, der die Neigung der Pleuelstange (9) zur Bewegungsrichtung der bewegbaren Vorrichtung (5) darstellt, und
$Vt$ die Geschwindigkeit der Produkte (4) auf dem Fließband (1) ist, und
$R$ eine Proportionalkonstante (der Kurbelradius) ist.

3. Vorrichtung nach Anspruch 1 oder 2, **dadurch gekennzeichnet, daß** die Steuerungsmittel (11) auf das Antriebsmittel (6) einwirken, um so die Bewegungsgeschwindigkeit der bewegbaren Vorrichtung (5) lediglich für einen Teilbereich des Hubs konstant zu halten, in dem die bewegbare Vorrichtung (5) dem Fließband (1) folgt, so daß in zumindest dem Anfangsteilbereich und dem Schlußteilbereich des Folgehubs sich die bewegbare Vorrichtung (5) nicht mit einer gleichförmigen Geschwindigkeit bewegt.

4. Vorrichtung nach Anspruch 3, **dadurch gekennzeichnet, daß** die Antriebsmittel (6) während des Anfangs- und Schlußteilbereichs des Folgehubs mit einer konstanten Geschwindigkeit betrieben werden.

5. Vorrichtung nach einem der voranstehenden Ansprüche, **dadurch gekennzeichnet, daß** die Antriebsmittel einen Drehmotor (6) umfassen.

6. Vorrichtung nach Anspruch 1 oder 5, **dadurch gekennzeichnet, daß** die Antriebsmittel (6) elektrisch betrieben werden.

7. Vorrichtung nach Anspruch 6, **dadurch gekennzeichnet, daß** die Antriebsmittel einen bürstenlosen elektrischen Motor (6) umfassen.

8. Vorrichtung nach einem der voranstehenden Ansprüche, **dadurch gekennzeichnet, daß** die bewegbare Vorrichtung (5) zumindest ein bewegbares Element (12, 13) trägt, das während des Folgehubs auf die Produkte (4) einwirken kann.

9. Vorrichtung nach Anspruch 8, **dadurch gekennzeichnet, daß** das zumindest eine bewegbare Element (12, 13) ein Schneidmittel ist.

10. Vorrichtung nach Anspruch 9, **dadurch gekennzeichnet, daß** das Schneidmittel ein Ultraschall-Schneidwerkzeug (12, 13) ist.

11. Vorrichtung nach einem der Ansprüche 8 bis 10, **dadurch gekennzeichnet, daß** sich das zumindest eine bewegbare Element (12, 13) relativ zum Fließband (1) mit einer Hin- und Herbewegung bewegt.

12. Vorrichtung nach Anspruch 11, **dadurch gekennzeichnet, daß** das zumindest eine bewegbare Element (12, 13) mittels eines jeweiligen Kurbelstangentriebs (16, 18; 20, 22) durch jeweilige Antriebsmittel (14, 15) angetrieben wird, die sich in einem Drehsinn bewegen.

13. Vorrichtung nach Anspruch 12, **dadurch gekennzeichnet, daß** die jeweiligen Antriebsmittel (14, 15) mit dem Antriebsmittel (6) synchronisiert sind, so daß die Hin- und Herbewegung des zumindest einen bewegbaren Elementes (12, 13) eine Synchronisierung mit der Bewegung der bewegbaren Vorrichtung (5) um dem Fließband (1) zu folgen bewirkt.

14. Vorrichtung nach Anspruch 13, **dadurch gekennzeichnet, daß** ein bewegbares Element der bewegbaren Vorrichtung (5) zugeordnet ist und einen entsprechenden Bewegungszyklus für jedes zu behandelnde Produkt (4) ausführen kann.

**15.** Vorrichtung nach Anspruch 13, **dadurch gekennzeichnet, daß** eine Anzahl (n) bewegbarer Elemente (12, 13) der bewegbaren Vorrichtung (5) zugeordnet ist, und jedes einen jeweiligen Zyklus an Vor- und Zurückbewegungen für jedes der entsprechenden Anzahl (n) der zu behandelnden Produkte (4) ausführen kann.

**16.** Vorrichtung nach Anspruch 15, **dadurch gekennzeichnet, daß** zwei bewegbare Elemente (12, 13) der bewegbaren Vorrichtung (5) zugeordnet sind, und jedes einen entsprechenden Zyklus an Vor- und Zurückbewegung für jede der zwei zu behandelnden Produkte (4) ausführen kann und für jede Hin- und Herbewegung der bewegbaren Vorrichtung (5).

**17.** Vorrichtung nach Anspruch 15 oder 16, **dadurch gekennzeichnet, daß** die Vor- und Zurückbewegungen der bewegbaren Elemente (12, 13) miteinander synchronisiert sind, wobei der Winkel der Phasenunterschiede zwischen den Bewegungen den Anstand (P) bestimmt, der die aufeinanderfolgenden Positionen trennt, an der die bewegbaren Elemente (12, 13) auf die auf dem Fließband (1) voranschreitenden Produkte (4) einwirken.

**Revendications**

**1.** Dispositif de synchronisation de mouvement destiné à agir, a l'utilisation, entre un transporteur (1), sur lequel un flux de produits (4) avance, et un dispositif mobile (5) qui peut aller et venir le long de la trajectoire générale de progression des produits sur le transporteur (1) afin d'avoir une course suivant le déplacement des produits sur le transporteur (1), le dispositif comprenant un mécanisme à bielle et manivelle comprenant une manivelle (7) entraînée à rotation par un moyen d'entraînement (6) et une bielle agissant entre le tourillon (8) de la manivelle (7) et le dispositif mobile (5) de manière que le mouvement du moyen d'entraînement (6) dans un seul sens entraîne le mouvement alternatif du dispositif mobile (5), caractérisé en ce qu'il comprend le moyen d'entraînement (6) associé à un moyen de commande (11) pour réguler sélectivement la vitesse ($2\pi n$) du moyen d'entraînement (6), et un moyen de détection (1a) qui détecte l'une de la position et de la vitesse de déplacement du transporteur (1), et produit un signal respectif, le moyen de commande (11) étant sensible au signal respectif afin de synchroniser le mouvement du dispositif mobile (5) avec le mouvement du transporteur (1) et aussi sensible à la position ($\gamma$, $\beta$) d'au moins l'un de la manivelle (7) et du dispositif mobile (5) afin de réguler sélectivement la vitesse ($2\pi n$) du moyen d'entraînement (6) durant au moins une portion de ladite course suivie par le dispositif mobile (5) de manière à garder la vitesse de déplacement (Vo) du dispositif mobile (5) constante et correspondant à la vitesse (Vt) des produits (4) sur le transporteur (1).

**2.** Dispositif selon la revendication 1, caractérisé en ce que le moyen de commande (11) régule la vitesse ($2\pi n$) du moyen d'entraînement (6) d'après une équation du type :

$$2\pi n = Vt/(R \sin (\gamma + \beta) \cos\beta)$$

où

$2\pi n$ désigne la vitesse du moyen d'entraînement,
$\gamma$ est un angle désignant la position angulaire de la manivelle (7) par rapport à la trajectoire du dispositif mobile (5),
$\beta$ est un autre angle indiquant l'inclinaison de la belle (9) par rapport à la trajectoire du dispositif mobile (5), et
Vt désigne la vitesse des produits (4) sur le transporteur (1), et
R est une constante de proportionnalité (rayon de la manivelle).

**3.** Dispositif selon la revendication 1 ou 2, caractérisé en ce que le moyen de commande (11) agit sur le moyen d'entraînement (6) afin de garder la vitesse de déplacement du dispositif mobile (5) constante sur une portion seulement de la course sur laquelle le dispositif mobile (5) suit le transporteur (1) de manière que, dans au moins la portion initiale et la portion finale de la course suivie, le dispositif mobile (5) se déplace à une vitesse non uniforme.

**4.** Dispositif selon la revendication 3, caractérisé en ce que le moyen d'entraînement (6) est actionné à une vitesse constante durant les portions initiale et finale de la course suivie.

**5.** Dispositif selon l'une quelconque des revendications précédentes, caractérisé en ce que le moyen d'entraînement comprend un moteur rotatif (6).

6. Dispositif selon la revendication 1 ou 5, caractérisé en ce que le moyen d'entraînement (6) est actionné électriquement.

7. Dispositif selon la revendication 6, caractérisé en ce que le moyen d'entraînement comprend un moteur électrique sans balais (6).

8. Dispositif selon l'une quelconque des revendications précédentes, caractérisé en ce que le dispositif mobile (5) supporte au moins un organe mobile (12, 13) qui peut agir sur les produits (4) durant sa course suivie.

9. Dispositif selon la revendication 8, caractérisé en ce que ledit au moins un organe mobile (12, 13) est un outil de coupe.

10. Dispositif selon la revendication 9, caractérisé en ce que l'outil de coupe est un outil de coupe par ultrasons (12, 13).

11. Dispositif selon l'une quelconque des revendications 8 à 10, caractérisé en ce que ledit au moins un organe mobile (12, 13) a un mouvement alternatif par rapport au transporteur (1).

12. Dispositif selon la revendication 11, caractérisé en ce que ledit au moins un organe mobile (12, 13) est entraîné au moyen d'un mécanisme à bielle et manivelle respectif (16, 18; 20, 22) par un moyen d'entraînement respectif (14, 15) qui a un mouvement dans un seul sens.

13. Dispositif selon la revendication 12, caractérisé en ce que le moyen d'entraînement respectif (14, 15) est synchronisé avec le moyen d'entraînement (6) de manière que le mouvement alternatif dudit au moins un organe mobile (12, 13) soit synchrone avec le mouvement du dispositif mobile (5) pour suivre le transporteur (1).

14. Dispositif selon la revendication 13, caractérisé en ce qu'un organe mobile est associé au dispositif mobile (5) et peut avoir un cycle respectif de déplacement pour chaque produit (4) traité.

15. Dispositif selon la revendication 13, caractérisé en ce qu'une pluralité (n) d'organes mobiles (12, 13) est associée au dispositif mobile (5) et chacune peut avoir un cycle respectif de mouvements de va-et-vient pour chaque pluralité correspondante (n) de produits traités (4).

16. Dispositif selon la revendication 15, caractérisé en ce que deux organes mobiles (12, 13) sont associés au dispositif mobile (5) et chacun a un cycle respectif de mouvements de va-et-vient pour chacun des deux produits traités (4), et pour chaque mouvement de va-et-vient du dispositif mobile (5).

17. Dispositif selon la revendication 15 ou 16, caractérisé en ce que les mouvements de va-et-vient des organes mobiles (12, 13) sont synchrones, l'angle de la différence de phase entre les mouvements déterminant la distance (P) séparant les positions successives auxquelles les organes mobiles (12, 13) agissent sur les produits (4) avançant sur le transporteur (1).

# FIG. 1

# FIG. 2

FIG. 3

EP 0 614 733 B1